# FASCICULE DE BREVET EUROPEEN

(11) **EP 2 495 458 B1**
(45) Date de publication et mention de la délivrance du brevet: **14.10.2015**
(21) Numéro de dépôt: 12157126.9
(22) Date de dépôt: 27.02.2012
(51) Int. Cl.: F16B 35/06, F16B 25/00

(54) **Vis à tête fraisée pour la fixation d'accessoires et quincaillerie sur une paroi métallique**
Gefräster Schraubenkopf für die Befestigung von Zubehörteilen und Eisenwaren an einer Metallwand
Countersunk-head screw for the attachment of accessories and hardware on a metal wall

(30) Priorité: 03.03.2011 FR 1151728
(43) Date de publication de la demande: 05.09.2012
(73) Titulaire: SFS Intec SAS, 26000 Valence (FR)
(72) Inventeur: Meireles, José, 26200 Montélimar (FR); Demesmay, Emmanuel, 44100 Nantes (FR)
(74) Mandataire: Cabinet HERRBURGER

(56) Documents cités:
- DE-U1- 9 210 272
- DE-U1- 9 405 595
- DE-U1- 29 617 847
- US-A- 3 313 197

## Description

### Domaine de l'invention

La présente invention concerne une Vis à tête fraisée pour la fixation de pièces prépercées avec un avant-trou fraisé sur une paroi métallique mince, la vis ayant une sous-tête conique reliée à la tige de vis munie d'un filetage, et le dessus de la tête comportant une empreinte pour la prise d'un outil de vissage.

Le document DE 92 10 272 U montre une vis avec les caractéristiques du préambule de la revendication 1.

### Etat de la technique

Les vis utilisées en quincaillerie du bâtiment pour la fixation ou dans l'ameublement pour la fixation d'un accessoire sur une paroi métallique, sont connues. Ces vis s'utilisent notamment pour fixer des éléments métalliques ou en matière plastique tels que des charnières, pommelles, organes de rotation de fenêtre sur des parois ou des profilés métalliques, comme par exemple un châssis de fenêtre en aluminium ou en acier.

Mais les vis actuelles présentent un certain nombre d'inconvénients.

En effet, on rencontre des difficultés, car, en général, surtout dans le cas de système de fenêtre ou de porte-fenêtre à ferrure dite oscillo-battante, c'est-à-dire permettant un pivotement autour d'un axe vertical pour l'ouverture du battant, mais également un pivotement autour d'un axe horizontal pour entrebâiller le battant, les pièces à fixer sont prépercées. Le préperçage a, en entrée, une fraisure ou avant-trou avec un angle de 90° pour recevoir la tête d'une vis à tête dite fraisée dont le dessous est conique et le dessus plat avec une empreinte pour un outil de vissage. Mais en général, ces fraisages ne laissent pas suffisamment de place en hauteur pour recevoir la tête de vis sans que celle-ci ne dépasse.

La tête de vis a une hauteur minimale permettant de contenir l'empreinte servant à la prise de l'outil de vissage/dévissage car les empreintes telles que les empreintes cruciformes ou empreintes Torx, nécessitent une certaine profondeur.

Une autre difficulté est celle de la faible épaisseur des parois métalliques sur lesquelles se fixent ces accessoires. Pour des raisons d'économie et d'efficacité ces parois sont de plus en plus minces de sorte que les vis ne permettent pas une bonne tenue au vissage car le pas des filets de vis est généralement inadapté.

En effet, les vis ont un pas métrique qui est celui utilisé généralement en mécanique. Mais ce pas est trop fin, c'est-à-dire que le pas étant petit, il faut visser plusieurs tours pour le serrage dans une paroi même mince. Cela se traduit par un temps de vissage excessif. De plus, la différence entre le diamètre extérieur du filet et le diamètre en fond de filet, est trop faible et ne permet pas un bon accrochage entre le filet de la vis et le filetage du perçage, ce qui donne une tenue à l'arrachement trop faible et surtout la résistance à la surtorsion au vissage est trop faible de sorte que le filet risque d'être détruit par rotation excessive, d'autant plus que le vissage se fait à l'aide d'une visseuse ; on peut certes en régler le couple limite de vissage, mais le fait de régler ce couple de vissage à une limite trop faible, ne permet pas de répondre à toutes les conditions de vissage de sorte qu'en pratique, le couple n'est jamais réglé à la limite maximale qui éviterait le survissage.

Il existe également des vis connues dont le pas de vis est grand et même supérieur à l'épaisseur du support métallique de sorte que l'accrochage ne se fait pas de manière suffisante entre le filet de la vis et la paroi du perçage. La tenue à l'arrachement ou la résistance à la surtorsion, sont là encore insuffisantes, car la partie métallique du support qui assure la fixation, est tenue entre seulement deux filets de la vis.

### But de l'invention

La présente invention a pour but de remédier aux inconvénients des vis de fixation, connues, et se propose de développer une vis du type ci-dessus permettant de fixer efficacement un accessoire sur une paroi métallique mince de moins de 2 mm d'épaisseur, avec une bonne résistance à la surtorsion au moment du serrage et une tête permettant de loger une empreinte sans que la tête ne dépasse de l'avant-trou fraisé de la pièce à fixer.

### Exposé et avantages de l'invention

A cet effet, l'invention a pour objet une vis du type défini ci-dessus, caractérisée en ce que
- la sous-tête de la tête est un cône d'une conicité de 100°, et
- le filetage de la tige remonte jusqu'à la jonction de la sous-tête conique et de la tige filetée.

Cette vis permet de fixer une pièce de quincaillerie ou autres pièces munies d'un préperçage avec un avant-trou conique sur un support constitué par une pièce avec une paroi métallique mince garantissant la fermeté de l'accrochage de la pièce par vissage et en évitant que la vis ne constitue une aspérité gênante dépassant de la surface de la pièce. On évite ainsi que la tête de vis ne risque de rayer une pièce glissant ou frôlant la surface de la pièce autour de l'emplacement de la vis. Comme le filetage arrive directement au niveau de la sous-tête grâce à la conicité de 100° de celle-ci, la vis garantit que le filetage reste en prise dans le perçage de la paroi métallique mince.

Même si l'axe de la vis ne coïncide par parfaitement avec l'axe du perçage fraisé de la pièce, le bord de la tête ne risque pas de dépasser de la surface de la pièce.

Grâce au-dessus bombé de la tête, il y a une profondeur suffisante dans la tête pour réaliser l'empreinte recevant l'outil de vissage tout en ayant le bord de la vis, c'est-à-dire la jonction entre le dessus et la sous-tête située en dessous du point haut du dessus de sorte que le bord de la vis reste toujours sous le dessous de la pièce ou plan passant par l'ouverture du préperçage fraisé même pour un angle d'inclinaison important de l'axe de la vis par rapport à l'axe du préperçage fraisé.

Suivant une caractéristique avantageuse, la jonction entre la sous-tête et la tige de la vis comporte une transition formée d'un cône intermédiaire d'une conicité de 40° et le filetage se poursuit par un filetage remontant sur le cône intermédiaire jusqu'à la jonction du cône intermédiaire et de cône de la sous-tête.

Le cône intermédiaire entre la tige filetée et le début de la sous-tête conique, permet de faire remonter plus haut le filetage et surtout créer un filetage remontant qui, du fait de la conicité de cette partie, se visse avec un effet de coin dans le filetage taillé dans la paroi mince de support par le filet de la tige filetée qui précède ce filetage remontant. On améliore d'autant l'efficacité du vissage.

Suivant une autre caractéristique avantageuse le pas est égal à 1 mm. En d'autres termes, le pas du filetage est inférieur à l'épaisseur de la tôle mince qui reçoit le filetage. Cette tôle mince a, en général, une épaisseur de l'ordre de 2 mm ou moins, de sorte que dans tous les cas, le filetage est accroché dans l'épaisseur du perçage réalisé dans la tôle. D'autre part, comme le pas est du même ordre de grandeur que l'épaisseur de la tôle, le filet de la vis a un relief suffisant pour résister au vissage et ne pas s'abîmer.

En particulier, de façon avantageuse, le pas du filetage est égal à 1 mm.

Suivant une caractéristique avantageuse, l'extrémité de la tige filetée à l'opposé de la tête, est une extrémité autoperceuse. Cela permet de visser sans faire de préperçage.

Suivant une autre caractéristique avantageuse, le diamètre de la tête à la jonction du dessus bombé et de la sous-tête conique, est égal à 7,2 mm.

### Dessins

La présente invention sera décrite ci-après de manière plus détaillée à l'aide de deux exemples de réalisation d'une vis selon l'invention et d'exemples de deux vis connues présentées à titre de comparaison.

Dans les dessins :
- la figure 1 est une vue de face d'un premier mode de réalisation d'une vis selon l'invention à l'échelle 1 et à l'échelle 4,
- la figure 2 est une vue de face d'un second mode de réalisation d'une vis selon l'invention à l'échelle 1 et à l'échelle 4,
- la figure 3 est une vue à échelle très agrandie de la mise en place d'une vis selon l'invention et d'une vis selon l'état de la technique,
- la figure 4 montre une vis selon l'invention et une vis connue à l'échelle 5, pour la comparaison de la hauteur de tête,
- la figure 5 montre une vis selon l'invention et une vis connue, représentées à l'échelle 5 pour la comparaison de la hauteur de départ de filetage,
- la figure 6 est une vue comparative de la mise en place d'une vis selon le premier mode de réalisation de l'invention et d'une vis connue,
- la figure 7 est une vue comparative de la mise en place d'une vis selon le second mode de réalisation de l'invention et d'une vis connue,
- la figure 8 montre par comparaison la mise en place désaxée d'une vis selon l'invention et d'une vis connue,
- la figure 9 est une vue d'un premier exemple de vis connue représentée à l'échelle 1 et à l'échelle 4,
- la figure 10 est un exemple d'une seconde vis connue à l'échelle 1 et à l'échelle 4.

### Description de modes de réalisation de l'invention

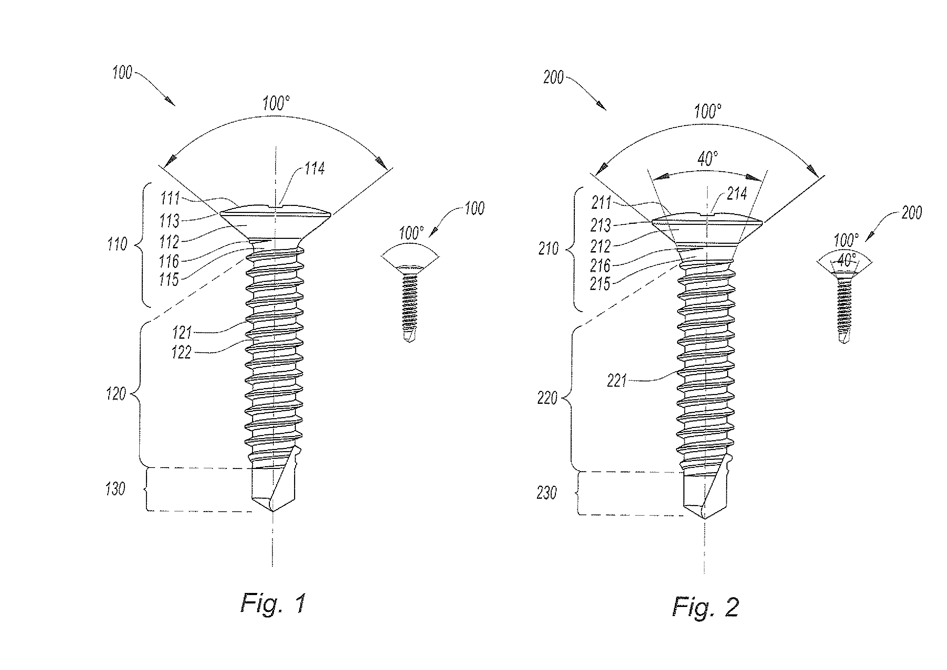

Selon la figure 1, l'invention a pour objet une vis à tête fraisée pour la fixation de pièces prépercées munies d'un avant-trou fraisé, sur une paroi métallique mince. La vis 100 se compose d'une tête 110 avec un dessous ou sous-tête conique 112, une tige 120 munie d'un filetage autotaraudant 121 et d'une extrémité autoperceuse 130. Toutefois, selon un exemple non représenté, la vis peut ne pas comporter d'extrémité autoperceuse et elle se visse alors dans un préperçage.

Le dessus 111 de la vis 100 est bombé et comporte une empreinte 114 pour la prise d'un outil de vissage telle qu'une empreinte cruciforme, une empreinte PZ, une empreinte Torx, ou autres empreintes spéciales. Cette empreinte 114 est une cavité réalisée dans la tête de vis 110. L'empreinte étant connue, elle n'est pas représentée.

La sous-tête 112 est un cône d'un angle de 100° qui rejoint par une amorce de sous-tête 115 et la tige 120 munie du filetage autotaraudant 121. Le filetage 121 a un pas égal à une fraction de l'épaisseur (e) de la paroi métallique mince (tôle mince) à laquelle on fixe la pièce. Comme la paroi métallique mince a une épaisseur (e) de l'ordre de 1,8 à 2 mm, on choisit avantageusement un rapport de 1,5 entre l'épaisseur (e) et le pas (P) du filetage, e/P = 1,5, de sorte que pour ce type d'application, le pas du filetage sera de 1 mm.

Le filetage 121 se poursuit par un début de filetage ou filetage remontant 116 qui arrive pratiquement à la jonction entre l'extrémité supérieure de la tige 120 et l'amorce 115 de la sous-tête conique 112. En effet, la conicité très évasée de 100° de la sous-tête conique 112, permet à l'outil réalisant le filetage de remonter sur la tige 120 pratiquement jusqu'à la jonction de la tige 120 et du sous cône 112 de la tête 110.

La tige 120 de la vis au sommet du filetage 121 a un diamètre extérieur compris entre 3,70 et 3,95 mm, et le creux 122 du filetage 121 a un diamètre intérieur compris entre 2,70 et 2,95 mm.

Le diamètre de la périphérie de la tête de vis 110, c'est-à-dire le bord 113 à la jonction entre le dessus bombé 111 et la sous-tête conique 112, a un diamètre de 7,2 mm.

La figure 2 montre un second mode de réalisation d'une vis à tête fraisée 200 selon l'invention, qui se distingue du premier mode de réalisation par une forme conique constituée par un cône intermédiaire 215 reliant le dessous conique ou sous-tête conique 212 à la tige 220. Ce cône intermédiaire 215 d'une conicité de 40° est muni d'un filetage 216 qui remonte sur toute la surface du cône intermédiaire 215 jusqu'à la jonction du cône intermédiaire 215 et du cône de la sous-tête 212.

Le dessus 211 de la tête est bombé et la jonction entre le dessus 211 et le dessous conique 212 forment le bord 213 de la tête 210. La sous-tête 212 a une conicité de 100°.

Les autres éléments de ce mode de réalisation 200 sont identiques à ceux du premier mode de réalisation 100. L'extrémité peut être une extrémité autoperceuse 230 ou se terminer par le filetage 221 suivant que la vis 200 est destinée à percer le support auquel elle est vissée ou à passer dans un préperçage réalisé dans celui-ci.

Le filetage 221 a un diamètre analogue ou identique à celui du filetage 121 de la vis 100 et il en est de même du creux du filetage.

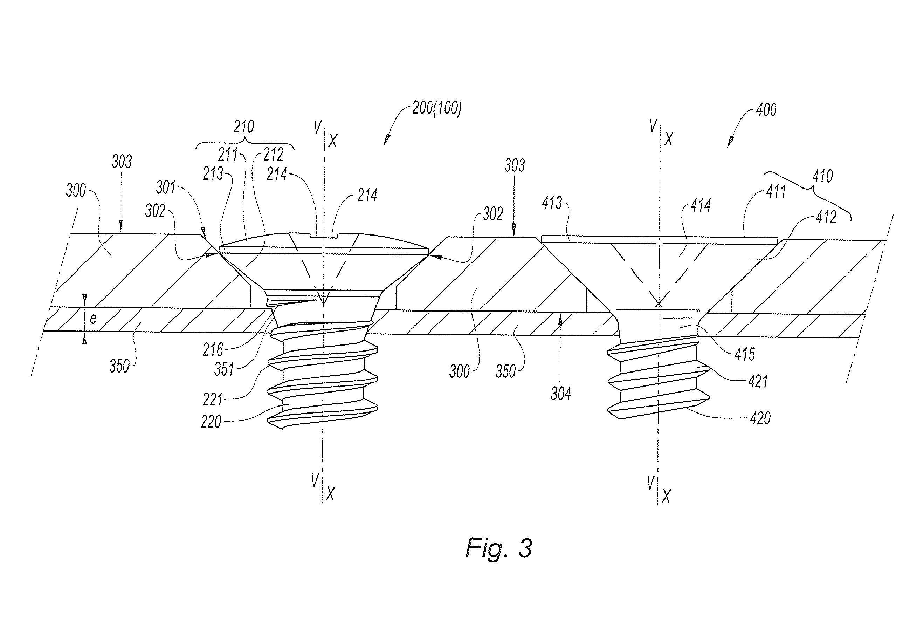

La figure 3 est une vue à échelle très agrandie montrant la position de la vis 200 (100) selon l'invention reliant une pièce 300 à un support 350 constitué par une tôle mince et à titre de comparaison, une vis connue 400 installée dans les mêmes conditions.

La vis 200 selon l'invention représentée, correspondant au second mode de réalisation avec une sous-tête conique 212 et un cône intermédiaire 215 muni du filetage remontant 216 et poursuivant le filetage 221 de la tige 220.

Cette figure montre que comme le veut la pratique, le perçage fraisé 301 de la pièce 300 à fixer sur le support 350, est un cône fraisé d'un angle de 90° ; la tête 210 de la vis selon l'invention s'appuie contre le cône fraisé 301 sur une surface de contact 302 pratiquement linéaire, correspondant à l'intersection du plan passant par le bord 213 de la tête 210 et du cône fraisé 301. Le contact linéaire 302 s'étale en pratique sur une petite bande périphérique sous l'effet de la déformation de la surface du cône 301. Cette figure montre que le bord 213 de la tête 210 reste en dessous de la surface 303 de la pièce 300 et seul le sommet arrondi du dessus bombé de la tête apparaît en surface.

Par ailleurs, le pas du filetage 221 étant dimensionné pour correspondre à une fraction de l'épaisseur (e) de la paroi métallique mince 350, il y a nécessairement un filet du filetage remontant 216 ou du filetage 221 de la tige 220, accroché dans la tôle 350 traversée par la vis. De plus, dans le cas de cette variante de vis 200 avec un cône intermédiaire 215, la forme conique et non pas cylindrique de la base du filetage, c'est-à-dire le filetage remontant 216 sur le cône intermédiaire 215, fait que le filet se force dans le filetage taraudé dans le perçage 351 par le passage du filetage 221 de tige 220 de la vis 200.

La partie droite de la figure 3, la vis connue 400 à tête fraisée 410 conique à 90° et dessus plat 411, montre que cette tête s'appuie par la surface de la sous-tête conique 412 dans la surface conique fraisée 301. de la pièce 300 et le bord 413 de la tête 410 est à niveau avec la surface supérieure 303 de la pièce 300, voire en dépasse légèrement.

Des mesures ont confirmé que dans la position de vissage parfaitement coaxiale entre l'axe vv de la vis et l'axe xx du cône fraisé 301, la tête peut dépasser de l'ordre de 0,5 mm pour une tête à dessous ayant une conicité de 90° et ce dépassement peut atteindre 0,32 mm dans le cas d'une vis connue dont le dessous a une conicité de 80°.

De plus, pour des raisons d'outillage de fabrication, le filetage tel qu'il existe sur les vis connues 400 s'arrêtant sur la tige 420 à une certaine distance sous sous-tête conique 412 de la tête 410, il ne mord pratiquement pas dans l'épaisseur de la tôle de fixation 350 et se limite à simplement pincer cette tôle. En effet, l'amorce 415 de la tige 420 sous la tête 410 est une zone non filetée de sorte que la partie non filetée 415 sous la surface inférieure 304 de la pièce 300, peut représenter entre 0,66 et 0,76 mm.

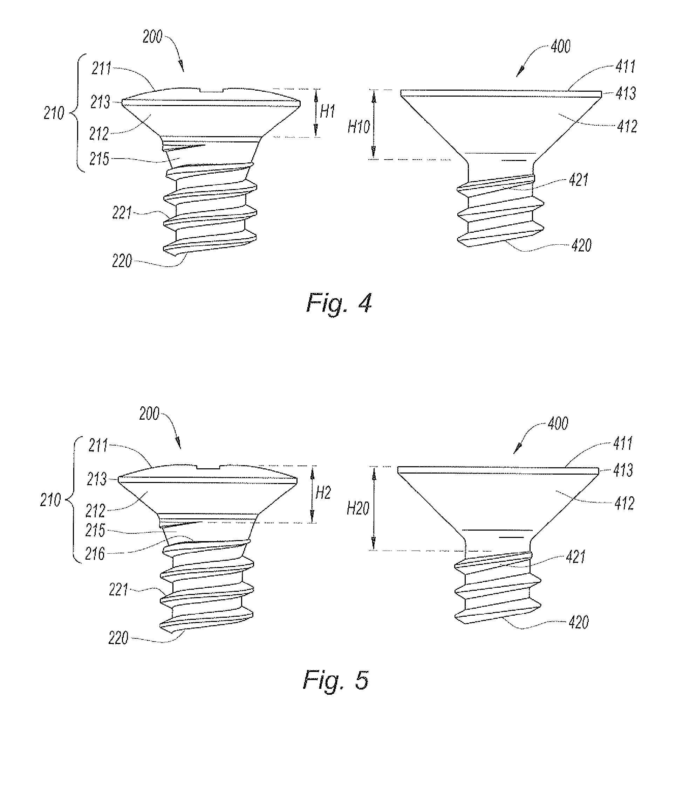

La figure 4 est une vue partielle de la tête 210 de la vis 200 selon le second mode de réalisation comparée à la tête 410 d'une vis connue 400, les deux vis étant représentées dans des positions identiques et à l'échelle 5.

Cette vue comparative montre la hauteur H1 de la tête 210 de la vis 200 selon l'invention et celle H 10 de la tête 410 de la vis connue. La hauteur H1 de la tête de vis 200 selon l'invention est réduite de manière importante par rapport à celle H 10 de la vis connue 400.

La figure 5 est une vue comparative de la vis 200 selon l'invention et de la vis connue 400 pour mettre en évidence la hauteur du départ du filetage mesurée à partir du dessus de la tête. Le départ du filetage 216, 221 de la vis 200 selon l'invention est très au-dessus (hauteur H2) du départ (hauteur H20) du filetage 421 de la vis connue 400, le dessus des deux têtes étant au même niveau.

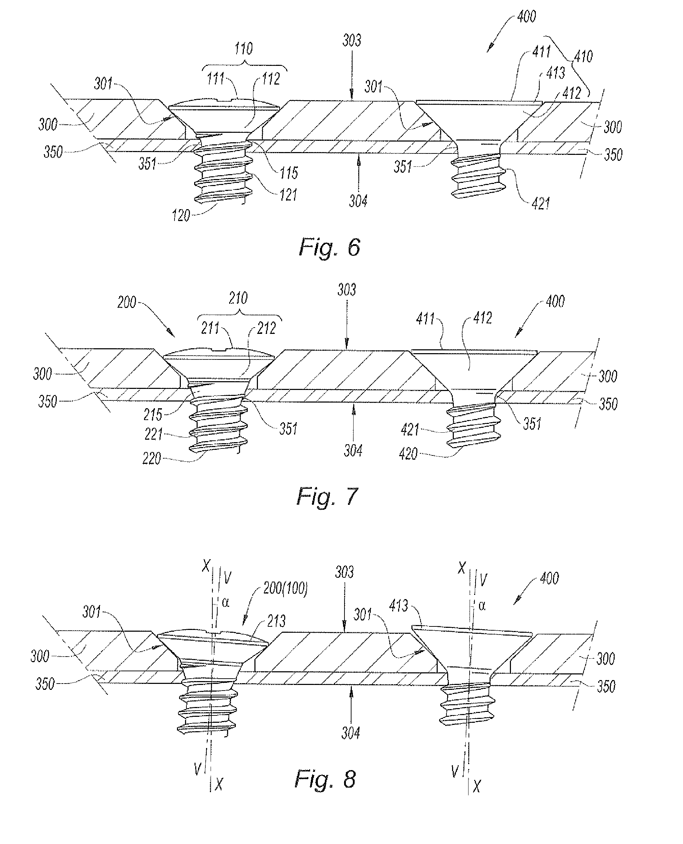

La figure 6 est une vue comparative montrant la mise en place d'une vis 100 selon le premier mode de réalisation de l'invention et d'une vis connue 400 dans un avant-trou fraisé 301 d'une pièce 300 pour relier la pièce à une tôle mince 350. Cette figure met en évidence la position du dessus bombé 111 de la tête 110 dans l'avant-trou fraisé 301 de la pièce ; seul le sommet du dessus bombé 111 de la tête vient au niveau, éventuellement dépassant le dessus 303 de la surface 300 de la pièce, alors que la tête 410 de la vis connue est à niveau et son bord 413 peut éventuellement dépasser ou constituer une arête vive.

Cette vue comparative montre également l'accrochage du filetage 121 de la vis selon l'invention dans la tôle mince 350, alors que le filetage 421 de la vis connue 400 est pratiquement sorti de la tôle 350 et se limite à la pincer.

La figure 7 est une vue comparative analogue à la précédente montrant la position de la vis 200 selon le second mode de réalisation de l'invention par comparaison avec la vis connue 400. Les remarques faites à propos de la figure 6, s'appliquent également dans ce cas. En outre, cette figure souligne l'effet de serrage réalisé par le cône intermédiaire 215 et son filetage 216 poursuivant le filetage 121 de la tige 120 et venant se serrer par effet de coin dans le taraudage de passage 351 taillé par le filetage 121 de la tige 120 dans la tôle mince 350.

Le filetage 421 est pratiquement arrêté sous le passage 351 sans y être accroché ou l'être seulement sur une fraction très réduite d'un tour de filetage.

La figure 8 montre un cas particulier de positionnement de la vis 200 selon l'invention et de la vis connue 400.

En effet, dans les figures précédentes, on a supposé que la vis (200/100) selon l'invention et la vis connue 400, étaient vissées d'une manière parfaitement coaxiale avec l'axe xx de l'avant-trou fraisé 301 de la pièce 300 de sorte que le plan passant par le bord 113, 213 de la tête 110, 210 de la vis 100, 200 selon l'invention et le plan du dessus plat 411 de la vis connue 400, étaient parfaitement parallèles à la surface, de la pièce à visser 300.

Cette situation de parallélisme des plans, est un cas idéal qui n'est pas toujours réalisé. Il peut en effet arriver que pour diverses raisons, la vis 100, 200, 400 ne se visse pas d'une manière parfaitement coaxiale, mais suivant un angle incliné (α) de son axe vv par rapport à l'axe xx du préperçage conique 301 de la pièce 300. Cette situation est montrée à titre comparatif pour la vis selon l'invention 200 et la vis connue 400.

Pour la vis 200 (100) selon l'invention, même pour un angle d'inclinaison (α) relativement important, le bord 213 de la tête 210 touche toujours le cône de l'avant-trou fraisé 301 et ne vient pas en saillie par rapport à la surface 303 de la pièce. Dans le cas de la vis connue 400, cette situation est impossible. Le bord 413 de la tête 410 inclinée par rapport à l'axe xx de l'avant-trou fraisé 301, dépasse nécessairement d'un côté par rapport à la surface 303 de la pièce 300 et constitue une aspérité gênante susceptible de rayer une pièce glissant ou frôlant le dessus 301 de la pièce 303 ainsi vissée.

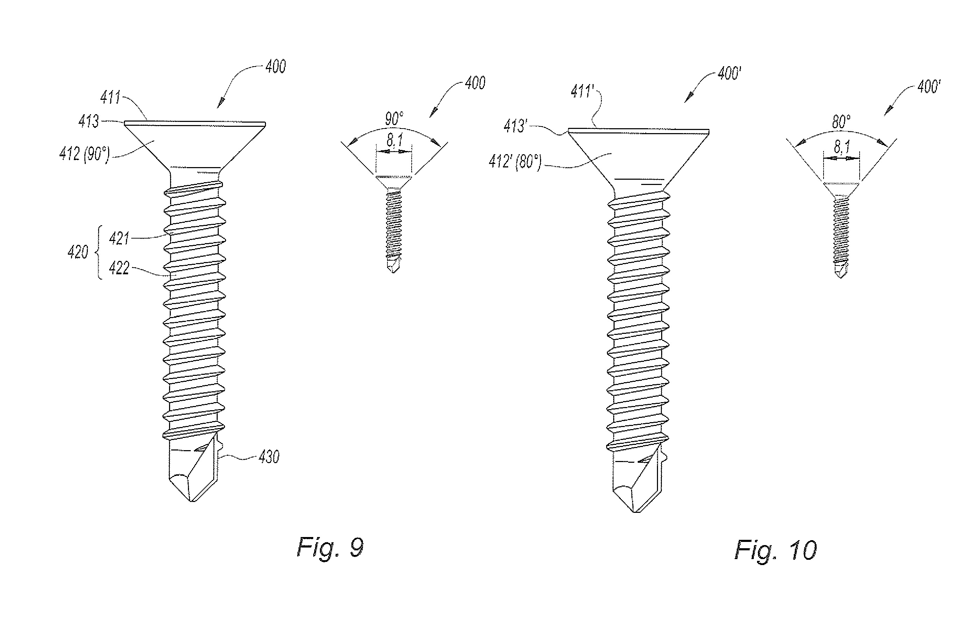

Les figures 9 et 10 montrent deux exemples de vis connues 400, 400', courantes.

La figure 9 montre une vis connue 400 destinée aux mêmes applications que celle de la vis 100, 200 selon l'invention. Cette vis connue 400 a une tête plate 411 avec une sous-tête conique 412 d'une conicité de 90°. Le diamètre de la tête 410, (413) est de 8,1 mm. L'extrémité avant de la tige 420 est une extrémité autoperceuse 430. Elle peut également se terminer simplement par le filetage et une pointe du fait de l'outillage de filetage. Le filetage 421 s'arrête très en dessous de la jonction entre la sous-tête conique 412 et la tige 420 de la vis 400.

Une telle vis connue se présente avec ou sans pointe autoperceuse avec un filet correspond à la norme ISO 1478 est encore appelé filet « 3.9 ». Le pas de vis est de 1,3 mm ; le diamètre extérieur du filet 421 est compris entre 3,79 et 3,91 mm et le diamètre intérieur du filet, c'est-à-dire au fond 420 du filet, est compris entre 2,77 et 2,92 mm. La tête 410 a une forme conique d'un angle de sous-tête égal à 90°. Dans de rares cas, les têtes sont de 80°.

L'autre vis non représentée utilisée pour cette application a un filet métrique selon la norme ISO 724 encore appelé filet métrique M4. Son pas est de 0,7 mm, le diamètre extérieur du filet est compris entre 3,9 et 4,1 mm et le diamètre intérieur du filet, c'est-à-dire au fond du filet est d'environ 3,24 mm. La tête associée à ce filet, a un angle de sous-tête de 90°.

La figure 10 montre un second exemple de vis connue 400' relativement rare. Celle-ci a une tête 410' à dessus plat 411' et une sous-tête conique 412' d'une conicité de 80°. Le diamètre de la tête 410', (413') est aussi de 8,1 mm.

### NOMENCLATURE

- 100: vis selon un premier mode de réalisation de l'invention
- 110: tête
- 111: dessus bombé
- 112: dessous conique/sous-tête conique
- 113: bord de la tête
- 114: empreinte
- 115: amorce de la sous-tête
- 116: amorce de filetage/filetage remontant
- 120: tige
- 121: filetage
- 122: creux du filetage
- 130: extrémité autoperceuse
- 200: vis selon un second mode de réalisation de l'invention
- 210: tête
- 211: dessus bombé
- 212: dessous conique/ sous-tête conique
- 213: bord de la tête
- 214: empreinte
- 215: cône intermédiaire
- 216: filetage remontant
- 220: tige
- 221: filetage
- 222: creux
- 230: extrémité autoperceuse
- 300: pièce à fixer
- 301: cône fraisé/avant-trou fraisé
- 302: surface linéaire de contact
- 303: surface du dessus de la pièce
- 304: surface du dessous de la pièce
- 350: support/tôle mince
- 351: passage
- 400: vis connue
- 410: tête
- 411: dessus plat
- 412: dessous conique à 90°
- 413: bord de la tête
- 414: empreinte
- 415: amorce de la tige
- 420: tige
- 421: filetage
- 400': vis connue à conicité à 80°
- 410': tête
- 411': dessus plat
- 412': dessous conique
- 413': bord de la tête
- 414': empreinte
- 415': amorce de la tige
- 420': tige
- 421': filetage

## Revendications

1. Vis à tête fraisée pour la fixation de pièces prépercées (300) avec un avant-trou fraisé (301) sur une paroi métallique mince (350), la vis ayant une sous-tête conique reliée à la tige de vis munie d'un filetage, et le dessus de la tête comportant une empreinte pour la prise d'un outil de vissage,
- le dessus (111, 211) de la tête (110, 210) étant bombé, vis **caractérisé en ce que**
- la sous-tête (112, 212) de la tête est un cône d'une conicité de 100°, et
- le filetage (121, 221) de la tige (120, 220) remonte jusqu'à la jonction de la sous-tête conique (111, 211) et de la tige filetée (120, 220).

2. Vis à tête fraisée selon la revendication 1,
**caractérisée en ce que**
la jonction entre la sous-tête (211) et la tige (220) de la vis (200) comporte une transition formée d'un cône intermédiaire (215) d'une conicité de 40° et le filetage (221) se poursuit par un filetage remontant (216) sur le cône intermédiaire (215) jusqu'à la jonction du cône intermédiaire (215) et de cône de la sous-tête (211).

3. Vis à tête fraisée selon la revendication 1,
**caractérisée en ce que**
le filetage (121, 221) a un pas (P) égal à une fraction de l'épaisseur (e) de la paroi métallique mince, et le pas est notamment égal à l'épaisseur (e) divisée par 1,5.

4. Vis à tête fraisée selon la revendication 3,
**caractérisée en ce que**
le pas est égal à 1 mm.

5. Vis à tête fraisée selon la revendication 1,
**caractérisée en ce que**
l'extrémité de la tige filetée (120, 220) à l'opposé de la tête (110, 210), est une extrémité autoperceuse (130, 230).

6. Vis à tête fraisée selon la revendication 1,
**caractérisée en ce que**
le diamètre de la tête (110, 210) à la jonction (113, 213) du dessus bombé (111, 211) et de la sous-tête conique (112, 212), est de 7,2 mm.

## Patentansprüche

1. Senkkopfschraube zur Befestigung von vorgebohrten Teilen (300) mit einer gefrästen Vorbohrung (301) an einer dünnen Wand (350) aus Metall, wobei die Schraube einen kegelförmigen Unterkopf aufweist, der mit dem Schraubenschaft verbunden ist, der mit einem Gewinde versehen ist, wobei die Oberseite des Kopfs eine Vertiefung zum Eingriff eines Schraubwerkzeugs aufweist, wobei
- die Oberseite (111, 211) des Kopfs (110, 210) gewölbt ist, wobei die Schraube **dadurch gekennzeichnet ist, dass**
- der Unterkopf (112, 212) des Kopfs ein Kegel mit einer Konizität von 100° ist, und
- das Gewinde (121, 221) des Schafts (120, 220) bis zur Verbindung zwischen dem kegelförmigen Unterkopf (111, 211) und dem Gewindeschaft (120, 220) aufsteigt.

2. Senkkopfschraube nach Anspruch 1,
**dadurch gekennzeichnet, dass**
die Verbindung zwischen dem Unterkopf (211) und dem Schaft (220) der Schraube (200) einen Übergang aufweist, der aus einem Zwischenkegel (215) mit einer Konizität von 40° gebildet ist, und dass sich das Gewinde (221) durch ein Gewinde (216) fortsetzt, das auf dem Zwischenkegel (215) bis zur Verbindung zwischen dem Zwischenkegel (215) und dem Kegel des Unterkopfs (211) aufsteigt.

3. Senkkopfschraube nach Anspruch 1,
**dadurch gekennzeichnet, dass**
das Gewinde(121, 221) eine Steigung (P) aufweist, die gleich einem Bruchteil der Dicke (e) der dünnen Wand aus Metall ist, und dass die Steigung insbesondere gleich der Dicke (e) geteilt durch 1,5 ist.

4. Senkkopfschraube nach Anspruch 3,
**dadurch gekennzeichnet, dass**
die Steigung gleich 1 mm ist.

5. Senkkopfschraube nach Anspruch 1,
**dadurch gekennzeichnet, dass**
die dem Kopf (110, 210) gegenüberliegende Spitze des Gewindeschafts (120, 220) eine selbstbohrende Spitze (130, 230) ist.

6. Senkkopfschraube nach Anspruch 1,
**dadurch gekennzeichnet, dass**
der Durchmesser des Kopfs (110, 210) an der Verbindung (113, 213) zwischen der gewölbten Oberseite (111, 211) und dem kegelförmigen Unterkopf (112, 212) 7,2 mm beträgt.

## Claims

1. Countersunk-head screw for the attachment of predrilled parts (300) with a countersunk pilot hole (301) to a thin metal wall (350), the screw having a conical sub-head which is connected to the screw shank provided with a thread, and the top of the head having an impression for receiving a screwing tool,
- the top (111, 211) of the head (110, 210) being domed,
which screw is **characterised in that**
- the sub-head (112, 212) of the head is a cone having a taper of 100°, and
- the thread (121, 221) of the shank (120, 220) rises as far as the junction of the conical sub-head (111, 211) and the threaded shank (120, 220).

2. Countersunk-head screw according to claim 1,
**characterised in that**
the junction between the sub-head (211) and the shank (220) of the screw (200) comprises a transition formed by an intermediate cone (215) having a taper of 40°, and the thread (221) continues by a rising thread (216) on the intermediate cone (215) as far as the junction of the intermediate cone (215) and the cone of the sub-head (211).

3. Countersunk-head screw according to claim 1,
**characterised in that**
the thread (121, 221) has a pitch (P) equal to a fraction of the thickness (e) of the thin metal wall, and the pitch is especially equal to the thickness (e) divided by 1.5.

4. Countersunk-head screw according to claim 3,
**characterised in that**
the pitch is equal to 1 mm.

5. Countersunk-head screw according to claim 1,
**characterised in that**
the end of the threaded shank (120, 220) opposite the head (110, 210) is a self-drilling end (130, 230).

6. Countersunk-head screw according to claim 1,
**characterised in that**
the diameter of the head (110, 210) at the junction (113, 213) of the domed top (111, 211) and the conical sub-head (112, 212) is 7.2 mm.
